# NEW EUROPEAN PATENT SPECIFICATION

(11) **EP 1 533 323 B2**
(45) Date of publication and mention of the opposition decision: **08.09.2021**
(45) Mention of the grant of the patent: 12.03.2014
(21) Application number: 03741152.7
(22) Date of filing: 02.07.2003
(51) Int. Cl.: B01D 1/14, B01D 3/38, C08F 6/10, C08F 6/12, C08C 2/06

(54) **METHOD OF REMOVING SOLVENT FROM POLYMER SOLUTION AND SOLVENT REMOVING APPARATUS**
VERFAHREN ZUR ENTFERNUNG VON LÖSUNGSMITTEL AUS POLYMERLÖSUNG UND LÖSUNGSMITTELENTFERNUNGSAPPARATUR
PROCEDE ET DISPOSITIF D'EXTRACTION DE SOLVANT D'UNE SOLUTION POLYMERE

(30) Priority: 03.07.2002 JP 2002194913
(43) Date of publication of application: 25.05.2005
(73) Proprietor: JSR Corporation, Tokyo 105-8640 (JP)
(72) Inventor: YAMAGUCHI, Tomohiro, Chuo-ku, Tokyo 104-8410 (JP); UCHIMURA, Kazumi, Chuo-ku, Tokyo 104-8410 (JP); WADA, Takeshi, Chuo-ku, Tokyo 104-8410 (JP); KUMAI, Naritsugu, Chuo-ku, Tokyo 104-8410 (JP)
(74) Representative: TBK
(86) International application number: PCT/JP2003/008414
(87) International publication number: WO 2004/007567

(56) References cited:
- GB-A- 1 205 776
- GB-A- 1 457 032
- JP-A- 10 330 404
- JP-A- 11 021 311
- JP-A- 2002 003 523
- US-A- 3 862 103
- US-A- 4 181 788

## Description

### Technical Field

The present invention relates to an apparatus for removing solvent from polymer solution. More specifically, the invention relates to an apparatus for removing solvent from polymer solution, which uses a method for efficiently removing solvent from polymer solution generated by solution polymerization.

### Background Art

Polymer contained in polymer solution generated by solution polymerization is generally recovered by rinsing the polymer solution in water, decomposing and removing catalyst residues and the like, and subsequently treating the resulting solution by evaporation process to remove volatile components such as solvent and unreacted monomers or a small amount of residual water from polymer solution. During the treatment by evaporation process, traditionally, solvent has been removed by steam stripping. The steam stripping is carried out by feeding steam generally from the bottom of a tank for removing solvent into the tank to put the solvent in contact with steam.

By the steam stripping method including feeding steam from the bottom of a single tank unit for removing solvent or the like, however, the inside of the system reaches an equilibrium state, so that there is a tendency that efficient removal of solvent cannot be performed. By a method for removing solvent including putting polymer solution in contact with steam using a gas-liquid mixer or the like, additionally, efficient removal of solvent is very difficult as well.

Such stripping methods and apparatus' therefore are known in the state of the art. As such, the GB-A-1 457 032 discloses a method of and an apparatus for stripping volatile material from an aqueous dispersion of polymeric substances. Similarly, the US 4,181,788 discloses a process for the production of a thermoplastic molding material based on vinyl polymers whereby the residual monomer is stripped off, and also the GB-A-1 205 776 discloses generally a method and an apparatus for stripping off volatile substances from fluids.

It is an object of the invention to provide a method for efficiently removing solvent from polymer solution generated by solution polymerization process and an apparatus for removing solvent from polymer solution for use in the solvent removal.

### Disclosure of the Invention

So as to suppress the reduction of the solvent removal efficiency because of the attainment of an equilibrium state in the inside of a tank for removing solvent, attempts were made to remove solvent by preparing the gas phase and liquid phase inside the tank for removing solvent into different equilibrium states to prepare the inside of one tank into pseudo-multi-steps. Specifically, attempts were made to improve the solvent removal efficiency by feeding a part of steam into a tube and feeding the remaining part thereof from the bottom of a tank for removing solvent to reduce the partial pressure of solvent in the gas contained in the liquid phase. According to the method, solvent is vaporized in the tube, so that the solvent can be separated from crumb to a certain level when the polymer solution is charged into the tank for removing solvent. Because fresh steam is fed from the bottom thereof, additionally, the partial pressure of solvent in the liquid phase is smaller than that in the gas phase, so that solvent is further removed. Consequently, solvent removal can be done efficiently as a whole.

The invention is achieved on the basis of such findings.

The invention relates to an apparatus according to claim 1. Further beneficial embodiments of the apparatus are defined in claims 2 to 5. Particular aspects are summarized in the below items.
1. A method for removing solvent from polymer solution by putting the polymer solution in contact with steam to remove the solvent by steam stripping, comprising:
   a step of feeding a part of said steam into a tube for transferring said polymer solution to a tank for removing solvent; and
   a step of feeding the remaining part of said steam into the inside of said tank for removing solvent;
   wherein
      (A) the whole amount of said steam is large as 100 parts by mass or more per 100 parts by mass of the solvent contained in said polymer solution and a part of said steam is 10 to 50% by mass when the whole amount of said steam is defined as 100% by mass; or
      (B) the whole amount of said steam is less than 100 parts by mass per 100 parts by mass of the solvent contained in the polymer solution and a part of said steam is 20 to 90% by mass when the whole amount of said steam is defined as 100% by mass.
2. The method for removing solvent from polymer solution according to item 1, wherein said tank for removing solvent is equipped with at least one selected from the following members (1), (2) and (3):
   (1) a partition member arranged beneath the position where a flush nozzle arranged in communication with said tube for transferring polymer solution is opened, so that the gas phase part of said tank for removing solvent may be partitioned into an upper part and a lower part, to suppress the flow of the solvent vapor discharged from said flush nozzle down to the side of the liquid phase;
   (2) a sprinkler arranged inside said tank for removing solvent to sprinkle warm water so as to suppress polymer adhesion or make deposited polymer flow down to the liquid phase part;
   (3) a flush nozzle structure selected from the following members (a) - (e) to reduce the flush speed of the polymer solution discharged from a flush nozzle arranged in communication with said tube for transferring polymer solution and to suppress the flow of the solvent vapor down to the side of the liquid phase,
      (a) a flush nozzle structure is a flush nozzle with a branch tube arranged on the side of the tip end thereof;
      (b) a flush nozzle structure is equipped at least with a cylinder opened toward the downward portion of said tank for removing solvent and a flush nozzle arranged in communication with said tube for transferring polymer solution, and opened toward the diameter direction of said cylinder in the vicinity of the inner wall face of said cylinder;
      (c) a flush nozzle structure is a spiral tube arranged in communication with said tube for transferring polymer solution and formed in a spiral shape along the vertical direction of said tank for removing solvent, where an opening is arranged toward the downwardness of said tank for removing solvent;
      (d) a flush nozzle structure is equipped a flush nozzle arranged large-diameter tube on the tip end of said flush nozzle and baffle arranged in the inside of said large-diameter tube;
      (e) a flush nozzle structure is a flush nozzle equipped a curve tube with a curved tube part which is arranged on the tip end of the flush nozzle.
3. The method for removing solvent from polymer solution according to item 1 or 2, wherein a gas-liquid mixer is arranged in said tube and a part of said steam is fed into said gas-liquid mixer.
4. An apparatus for removing solvent of item 1, including a tank for removing solvent, comprising:
   a tube for transferring polymer solution to transfer polymer solution to the tank for removing solvent, one end of which is opened in the tank for removing solvent,
   a steam feed tube for piping which is in communication with said tube for transferring polymer solution to feed steam to the said tube, and a steam feed tube for tank, one end of which is opened in said tank for removing solvent,
   said tank for removing solvent is equipped with at least one selected from the following members (1), (2) and (3):
      (1) a partition member arranged beneath the position where a flush nozzle arranged in communication with said tube for transferring polymer solution is opened, so that the gas phase part of said tank for removing solvent may be partitioned into an upper part and a lower part, to suppress the flow of the solvent vapor discharged from said flush nozzle down to the side of the liquid phase;
      (2) a sprinkler arranged inside said tank for removing solvent to sprinkle warm water so as to suppress crumb adhesion or make deposited crumb flow down to the liquid phase part;
      (3) a flush nozzle structure selected from the following members (a) - (e) to reduce the flush speed of the polymer solution discharged from a flush nozzle arranged in communication with said tube for transferring polymer solution and to suppress the flow of the solvent vapor down to the side of the liquid phase;
         (a) a flush nozzle structure is a flush nozzle with a branch tube arranged on the side of the tip end thereof;
         (b) a flush nozzle structure is equipped at least with a cylinder opened toward the downward portion of said tank for removing solvent and a flush nozzle arranged in communication with said tube for transferring polymer solution, and opened toward the diameter direction of said cylinder in the vicinity of the inner wall face of said cylinder;
         (c) a flush nozzle structure is a spiral tube arranged in communication with said tube for transferring polymer solution and formed in a spiral shape along the vertical direction of said tank for removing solvent, where an opening is arranged toward the downwardness of said tank for removing solvent;
         (d) a flush nozzle structure is equipped a flush nozzle arranged large-diameter tube on the tip end of said flush nozzle and baffle arranged in the inside of said large-diameter tube;
         (e) a flush nozzle structure is a flush nozzle equipped a curve tube with a curved tube part which is arranged on the tip end of the flush nozzle.
5. The apparatus for removing solvent according to item 4, wherein said tank for removing solvent is equipped with said members (1) and (2).
6. The apparatus for removing solvent according to item 4, wherein said tank for removing solvent is equipped with said members (1), (2) and (3).
7. The apparatus for removing solvent according to any one of items 4 to 6, wherein said apparatus is equipped with a gas-liquid mixer arranged in said tube for transferring polymer solution, and a steam feed tube for the gas-liquid mixer which is in communication with said tube for transferring polymer solution or said gas-liquid mixer to feed steam into said gas-liquid mixer.
8. The apparatus for removing solvent according to any one of items 4 to 7, wherein said partition member has a corn-type shape slanting downward from the side of the inner wall of said tank for removing solvent toward the side of the center thereof and has an opening only on the center part thereof.
9. The apparatus for removing solvent according to any one of items 4 to 8, wherein said apparatus being equipped with a member for suppressing crumb dispersion, and the member is arranged on the tip end of the flush nozzle with a branch tube arranged on the side of the tip end thereof and is opened toward the downwardness of said tank for removing solvent.

### Effects of the Invention

According to the method for removing solvent from polymer solution, solvent can efficiently be removed from polymer solution.

When the amount of the steam to be fed into the tube is at 10 to 90 % by mass provided that the whole amount of the steam is defined as 100 % by mass, solvent can more efficiently be removed.

Further, in case that the polymer contained in the polymer solution is a specific one, a polymer with a smaller content of residual solvent can be obtained.

In case that the solvent is a specific one, additionally, the concentration of the residual solvent can be reduced more readily.

In case that the boiling point of the solvent at a pressure of 0.1 MPa is within a specific range, solvent removal via contact with steam can be done more efficiently.

In case that the feeding of a polymer solution into the tank for removing solvent and the recovery of the polymer therein from the polymer solution are continuously done, the polymer with a smaller content of the residual solvent can be obtained efficiently.

In case that the amount of the steam to be fed into the tube is 0.5- to 2-folds of the theoretical amount thereof required for the evaporation of the solvent, solvent removal can be done more securely.

By the apparatus of the invention, solvent can efficiently be removed from polymer solution, although the apparatus is a very simple one.

In case that a gas-liquid mixer is arranged in the tube for transferring polymer solution, solvent can be removed more efficiently.

In case that a partition member, particularly a partition member with an opening only on the center part thereof is arranged, solvent separated from polymer descends in the tank for removing solvent with much difficulty so the solvent can be removed more efficiently.

In case that a sprinkler is arranged to sprinkle warm water so as to suppress polymer adhesion or make deposited polymer flow down to the liquid phase part, crumb adhesion on the inner wall face of the tank for removing solvent and the like can sufficiently be prevented.

In case that the apparatus is additionally equipped with specific flush nozzle structures such as flush nozzle with a branch tube arranged on the side of the tip end thereof, flush nozzle of cyclone type or flush nozzle of spiral type, crumb can readily be flushed toward the liquid phase part downward so that crumb adhesion on the inner wall face of the tank for removing solvent can be prevented.

In case that a member for suppressing crumb dispersion is arranged on the tip end part of such flush nozzle, crumb adhesion on the inner wall face of the tank for removing solvent can more efficiently be prevented.

As the "polymer solution", solutions containing polymer and solvent as generated by solution polymerization can be used.

The polymer includes but is not limited to any polymer generated by solution polymerization, for example butadiene rubber, isoprene rubber, styrene • butadiene copolymers such as styrene • butadiene rubber, styrene • isoprene copolymers such as styrene • isoprene rubber, ethylene • α-olefin copolymer rubber, ethylene • α-olefin-series copolymers such as ethylene • α-olefin • non-conjugated diene copolymer rubber, butyl rubber, styrene • butadiene • styrene block copolymer, hydrogenated styrene • butadiene • styrene block copolymer, butadiene resin or acrylic resin. Among them, preferable are butadiene rubber, styrene • butadiene rubber, styrene • butadiene • styrene block copolymer, and hydrogenated styrene • butadiene • styrene block copolymer.

For efficient solvent removal, the temperature of the polymer solution is 0 to 150 °C, preferably 30 to 100 °C in particular.

For efficient solvent removal, the number average molecular weight (Mn) of the polymer is 5,000 to 5,000,000, particularly 20,000 to 1,000,000, preferably 50,000 to 500,000.

The solvent type includes solvents for general use in solution polymerization, for example alicyclic hydrocarbon solvents such as cyclohexane, cyclopentane, and cycloheptane; aromatic hydrocarbon solvents such as toluene, xylene, and benzene; aliphatic hydrocarbon solvents such as n-hexane, n-pentane, isopentane, n-heptane, n-octane, and n-decane; and halogenated hydrocarbon solvents such as dichloromethane. Among them, preferable are n-hexane, n-pentane, cyclohexane and toluene. The solvent is satisfactorily a single one solvent type or a mixture solvent containing two or more solvents.

The solvent has a boiling point of 25 to 180 °C at a pressure of 0.1 MPa, particularly 60 to 120 °C at the pressure. A solvent with a boiling point within the range readily become azeotropic with water during solvent removal, so that the solvent can sufficiently be removed more readily.

Further, the viscosity of the polymer solution for solvent removal is with no specific limitation and is 0.001 to 300 Pa • s, particularly 0.005 to 200 Pa • s, preferably 0.01 to 100 Pa • s.

The content of the polymer is with no specific limitation. In case that the polymer solution is defined as 100 % by mass, the polymer is at 0.1 to 80 % by mass, particularly 1 to 50 % by mass, preferably 5 to 30 % by mass. When the content is too excess, the tube and the like may sometimes be occluded. When the content is too small, it is not preferable from the standpoint of efficient polymer recovery.

A part of the "steam" is fed into the tube for transferring polymer solution to the tank for removing solvent. In the tube, the steam and the polymer solution are in contact with each other, so that the solvent is vaporized. When the polymer solution is charged in the gas phase part in the upper part of the tank for removing solvent, a part of the vaporized solvent is separated from the polymer, so that the solvent is removed. (After the polymer solution is in contact with steam in the manner described above, the solution turns into a gas-liquid-solid mixture. Such mixture is also called as polymer solution. Additionally, the tube for transferring polymer solution transfers the gas-liquid-solid mixture after the polymer solution is in contact with steam. The part of the tube is also referred to as tube for transferring polymer solution.) Further, polymer with a small amount of residual solvent falls down into the liquid phase part in the lower part of the tank for removing solvent, where the polymer is mixed in the liquid phase part. By steam stripping with the residual steam feed into the liquid phase part, then, the solvent in the polymer is further removed. As described above, solvent can be removed efficiently by the process of feeding steam to the tube, the bottom of the tank for removing solvent and the like. For example, the concentration of residual solvent can be reduced efficiently to 3 % by mass or less, particularly 2.5 % by mass or less, preferably 2 % by mass or less by such solvent removal.

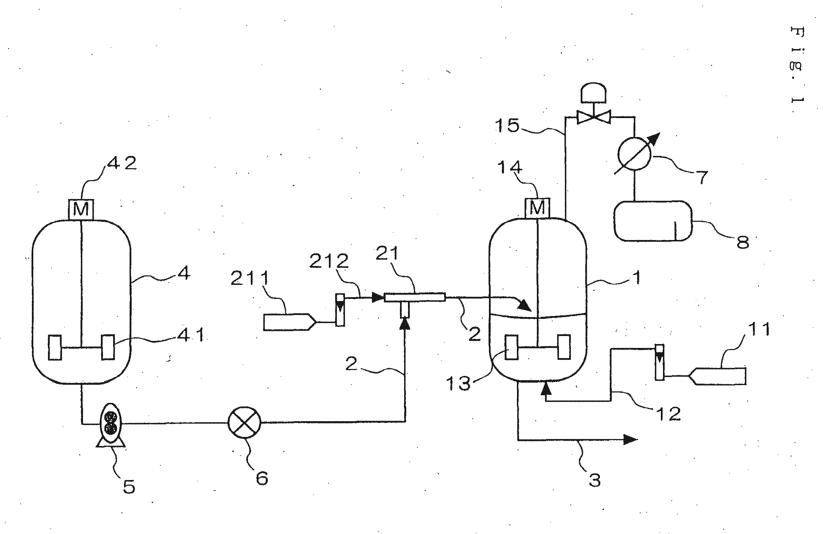

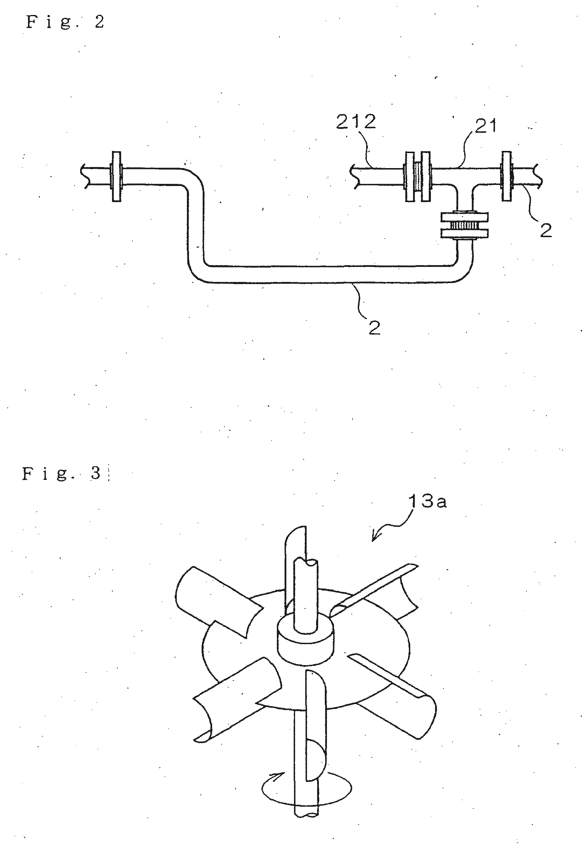

As shown in Fig. 1, gas-liquid mixer 21 of which an enlarged apparent view is shown in Fig. 2 is arranged in tube 2 for transferring polymer solution. The gas-liquid mixer 21 is arranged in the tube 2 for transferring polymer solution in such manner that steam is fed from steam feed tube 212 for gas-liquid mixer into the polymer solution inside the gas-liquid mixer 21, to sufficiently put the polymer and steam in contact with each other, so that the polymer is modified into crumb of a diameter of several millimeters, particularly about 4 to 7 mm. Thus, preferably, solvent removal can be done more efficiently.

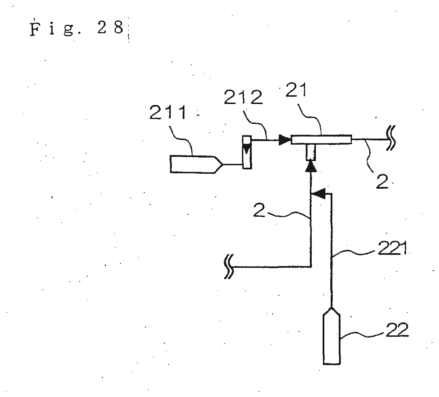

Furthermore, warm water is preferably fed into the polymer solution before steam is put in contact with the polymer solution in the tube. In such manner, subsequent contact efficiently between steam and the polymer solution can be improved to enable more efficient solvent removal. As to the position where warm water should be fed, any position located before the position where steam and the polymer solution are put in contact with each other is satisfactory, with no specific limitation. As shown in Fig.28, for example, warm water can be fed from warm water source 22 through warm water feed tube 221 to the tube 2 for transferring polymer solution with feed devices such as pump (not shown in the figure). The feeding position is more preferably close to the position where steam and the polymer solution are put in contact with each other.

The pressure and temperature of the steam to be fed to the tubes have no specific limitation, unless the advantages of the invention are deteriorated. Preferably, the pressure is 0.1 to 10 MPa, particularly 0.2 to 2 MPa on a gauge pressure basis, while the temperature is preferably 110 to 420 °C, particularly 140 to 300 °C.

The amount of the steam to be fed into the tube is 0.5-to 2-folds, particularly 0.7- to 1.5-folds, preferably 0.8- to 1.2-folds of the calculated amount thereof required for the evaporation of the solvent. Preferably, the amount thereof is substantially the theoretical amount (0.9- to 1.1-fold the calculated amount thereof). Herein, the theoretical amount means the amount of steam with calories (total of whole latent heat and whole sensible heat) required for evaporating solvent. The steam to be fed into the tube readily separates solvent when the polymer solution is charged from the tube into the tank for removing solvent, to sufficiently reduce residual solvent in the recovered polymer, together with the solvent removal by steam stripping in the tank for removing solvent. The theoretical amount of steam required for evaporating (vaporizing) solvent varies, depending on the solvent type, the temperature of polymer solution to be fed, and the like. Generally, the calculated amount is 0.2 to 0.4 in mass ratio to the solvent. In case of cyclohexane, for example, the calculated amount is about 0.25 to 0.32.

In case that the whole amount of steam is defined as 100 % by mass, the steam to be fed into the tube is preferably at 10 to 90 % by mass, although the amount of the steam varies, depending on the solvent type and the number of units of the tank for removing solvent. The amount of steam to be fed into the tube is preferably close to the calculated amount required for evaporating solvent. In case that the whole amount of steam is large as 100 parts by mass or more per 100 parts by mass of the solvent, the ratio of the amount of steam to be fed into the tube is decreased. When the whole amount of steam is small (less than 100 parts by mass), the ratio of the amount of steam to be fed into the tube is increased. Specifically, in case that the whole amount of steam is large as 100 parts by mass or more per 100 parts by mass of the solvent, 10 to 50 % by mass, particularly 15 to 40 % by mass in 100 % by mass of the whole steam amount is preferably fed into the tube. In case that the whole amount of steam is small (less than 100 parts by mass) than that of the solvent, alternatively, 20 to 90 % by mass, particularly 30 to 80 % by mass in 100 % by mass of the whole steam amount is preferably fed into the tube.

The total amount of steam to be fed into the tube or the gas-liquid mixer and the tank for removing solvent varies depending on the solvent type, the intended concentration of residual solvent, and the like. When the solvent contained in the polymer solution is defined as 100 parts by mass, the total amount of steam is preferably 50 to 200 parts by mass, particularly preferably 60 to 150 parts by mass in case of a single one unit of the tank for removing solvent. When the total amount of steam is less than 50 parts by mass, sufficient solvent removal is unlikely to occur. In case that two or more units (generally, three units or less) of the tank for removing solvent are arranged in connection and steam stripping is carried out in the individual unit tanks, the whole amount of steam can be reduced, so that the total amount of steam can be reduced to 30 to 100 parts by mass, particularly 30 to 70 parts by mass. When the total amount of steam is less than 30 parts by mass, sufficient solvent removal is unlikely to occur.

In case of feeding warm water into the tube for transferring polymer solution, the amount of warm water to be fed is not specifically limited by the kinds of the polymer, the solvent and the like. The amount thereof canbe 0.1-to 2-fold, preferably 0.2- to one-fold in mass ratio that of the polymer solution. The temperature of the warm water is satisfactorily the temperature of the polymer solution or higher, with no specific limitation. Generally, the temperature is 60 to 110 °C, preferably 70 to 100 °C.

The method for removing solvent from polymer solution can be practiced with an apparatus for removing solvent, which is equipped with at least one member of a partition member, a sprinkler, and a specific flush nozzle structure as described below. Further, a member for suppressing crumb dispersion can be mounted on the specific flush nozzle structure. Additionally, at least one of a partition member, a sprinkler, and a specific flush nozzle structure, and a member for suppressing crumb dispersion can individually be used in combination with the warm water feed.

Further, in the method for removing solvent, only single unit of the tank for removing solvent is sufficient for efficient solvent removal. However, additional tanks for removing solvent may be arranged in communication with the tank for removing solvent where a polymer solutionis charged, for multi-step solvent removal. In this case, solvent can be removed efficiently as a whole by adjusting the pressure of a tank charged with a solvent-containing polymer having a smaller solvent content on the side of a latter step to a pressure higher than the pressure of a tank in a former step.

The apparatus for removing solvent in accordance with the invention includes a tank for removing solvent, a tube for transferring polymer solution to transfer the polymer solution to the tank for removing solvent, having one end opened in the tank for removing solvent, a steam feed tube for piping in communication with the tube for transferring polymer solution having to feed steam to the tube, and a steam feed tube for tank having one end opened in the tank for removing solvent.

Additionally, a gas-liquid mixer is arranged in the tube for transferring polymer solution. Into this gas-liquid mixer, steam feed into the tube for transferring polymer solution is fed or steam is fed from a steam feed tube in communication with the gas-liquid mixer. As the gas-liquid mixer, any gas-liquid mixer is satisfactory with no specific limitation, as long as the mixer has a function to mix steam with polymer solution. However, such gas-liquid mixer at higher mix efficiency is preferable.

Herein, the individual steam feed tubes described above are separately connected to a steam source. Steam feed devices such as pump for transferring steam from the steam source into the individual tubes are arranged. Steam may be transferred and fed due to the difference in pressure between the steam source and each of the units to be fed with steam.

Further, the polymer solution is fed from a polymerization tank or an intermediate tank for storing polymer solution and transferred in the tube for transferring polymer solution. The polymerization tank and the intermediate tank are individually arranged with an agitation unit such as agitation wing for agitating the inside of the individual tanks. As such agitation wing, agitation wings of the related art, for example, a disk turbine wing and a slant puddle wing may be used. Additionally, corn cave-type agitation wing 13a in Fig. 3 can preferably be used. In case of using the corn cave-type agitation wing, steam can be dispersed so well that polymer and steam can be sufficiently put in contact with each other, leading to more efficient solvent removal and the reduction of the amount of steam required for solvent removal.

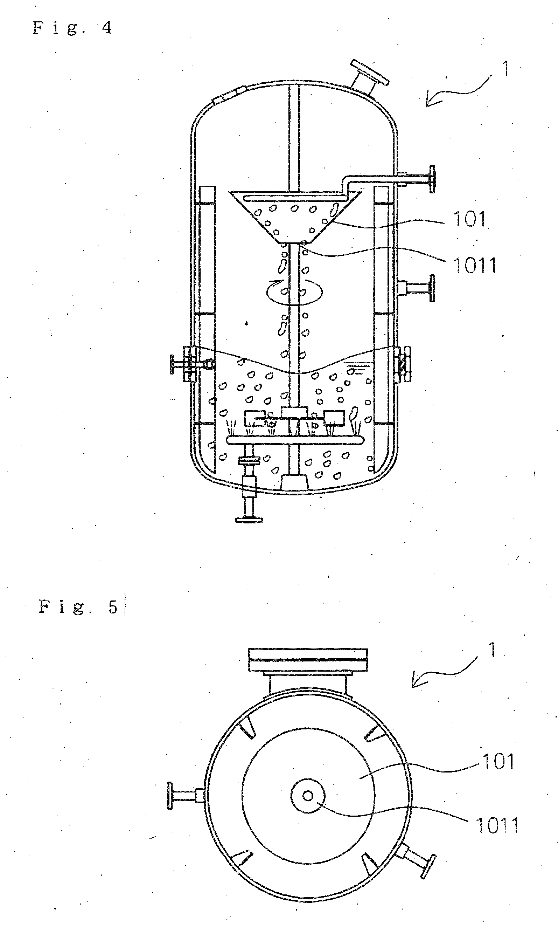

As shown in Figs.4 and 5, partition member 101 can be arranged in the tank for removing solvent so as to partition the gas phase part thereof into an upper part and a lower part. The partition member is generally arranged downward the position where a flush nozzle arranged in communication with the tube for transferring polymer solution is opened. In this case, the whole of the partition member may be positioned downward the position where the flush nozzle is opened. Otherwise, a part or the whole of the flush nozzle may be overlapped with the partition member in the upper side thereof in the vertical direction from the positional standpoint. Further, the partition member 101 has opening 1011 at least on the center part thereof. From the opening, crumb falls down to the liquid phase part. Alternatively, steam and solvent ascend toward the top of the tank from the opening if the opening and the partition member are opened into the inner wall of the tank. The shape of the partition member 101 should be just a shape to readily make crumb fall down toward the liquid phase part, with no specific limitation. However, the shape is preferably for example a corn shape slanting downward from the side of the inner wall of the tank 1 for removing solvent toward the side of the center thereof. In this case, the slanting angle is not specifically limited. Preferably, the angle is 10 to 60 °, particularly 20 to 50 ° to the cross-sectional face of the tank 1 for removing solvent.

The shaft of agitation wing is inserted through the opening 1011.

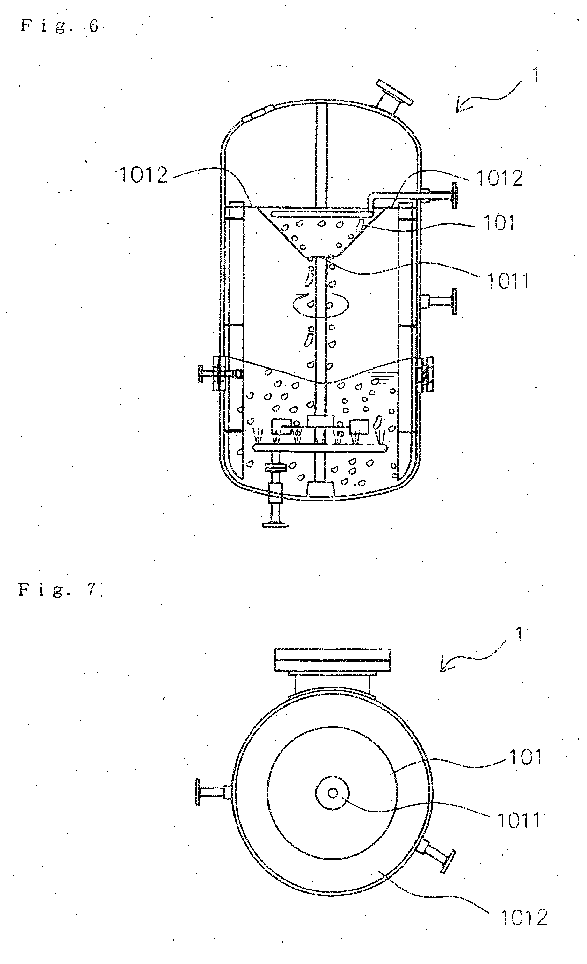

Preferably, the partition member 101 has an opening only on the center part but no opening on the side of the inner wall. When the partition member has an opening only on the center part, convection current of steam and solvent in the tank can be suppressed, so that steam and solvent can efficiently be recovered from the upper part of the tank, particularly the top thereof. As shown in Figs. 6 and 7, for example, the partition member with an opening only at the center part can be formed by arranging partition plate 1012 of a disk shape between the periphery of a partition member of a corn type and the like and the inner wall of the tank, and the like.

The material of the partition member is with no specific limitation. The partition member can be formed from metals, resins and the like. As the metals, stainless steel and aluminium can be used. As the resins, resins with great solvent resistance and high thermal resistance with no occurrence of deformation and the like at the temperature for solvent removal can be used, which are for example fluororesin, polyamide resin, and polyester resin. The fluororesin includes for example polytetrafluoroethylene and fluorinated ethylene polypropylene copolymer. The polyamide resin includes for example polyamide 6 and polyamide 66. The polyester resin includes for example polyethylene terephthalate and polyethylene naphthalate. Among these resins, fluororesin with good solvent resistance, thermal resistance and release properties is particularly preferable.

Partition members of metals, resins and the like may be used as they are. So as to suppress crumb adhesion, however, these partition members preferably have a property of suppressing polymer adhesion. The property of suppressing polymer adhesion can be given by forming a layer of a resin with excellent release properties such as fluororesin, at least on the upper face of a partition member made of metals and the like. Further, a partition member with a property of suppressing polymer adhesion can be prepared by forming the partition member, using a material with excellent release properties such as fluororesin.

A sprinkler is arranged inside the tank to sprinkle warm water so as to suppress crumb adhesion or so as to make deposited crumb fall down to the liquid phase part. The sprinkler is generally arranged upper than the position where the flush nozzle is opened in the gas phase part of the tank for removing solvent, so that warm water is sprinkled below the tank for removing solvent (just underneath or obliquely downwardly toward the inner wall face of the tank or toward the inner side of the tank). Via warm water sprinkled from the sprinkler, crumb can securely fall down toward the liquid phase part and crumb deposited on the inner wall face of the tank, the upper face of the partition member and the like can fall down to the liquid phase part. Warm water is preferably sprinkled uniformly on the cross-sectional face of the tank for removing solvent. The sprinkler preferably has such a structure to enable such sprinkling. The temperature of warm water is with no specific limitation. The temperature is preferably not less than a temperature inside the tank for removing solvent [Tt (°C)], particularly Tt to (Tt + 5) °C, more preferably Tt to (Tt + 10) °C.

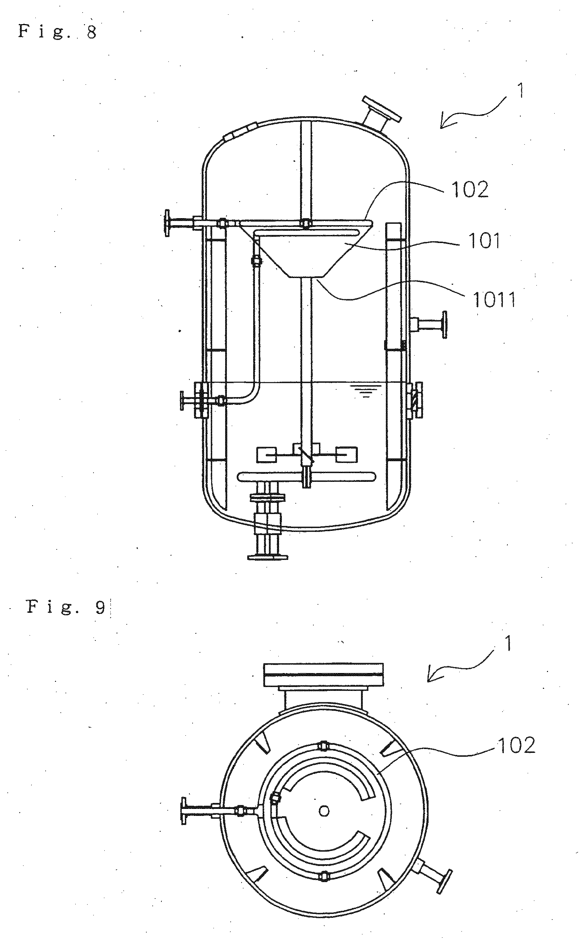

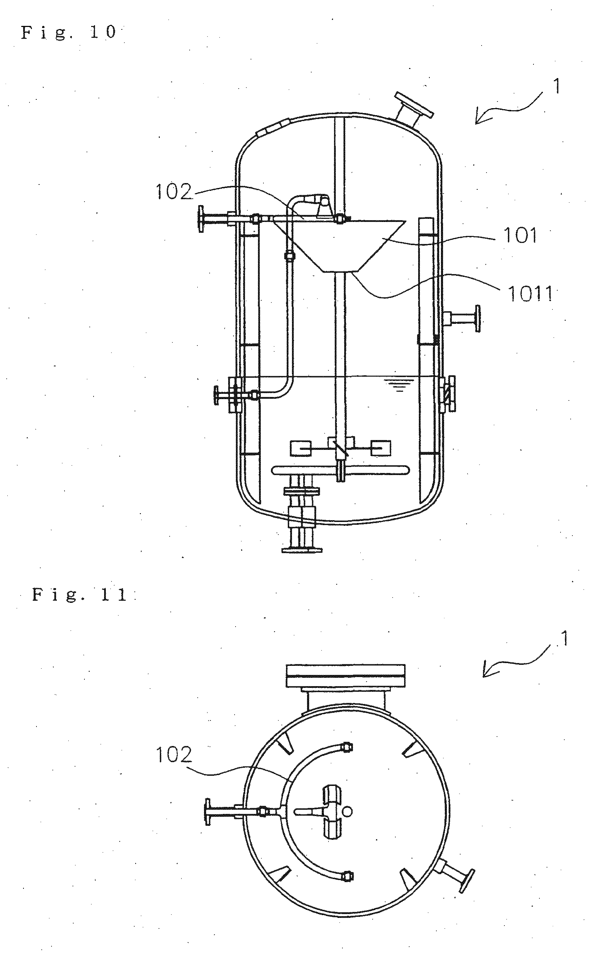

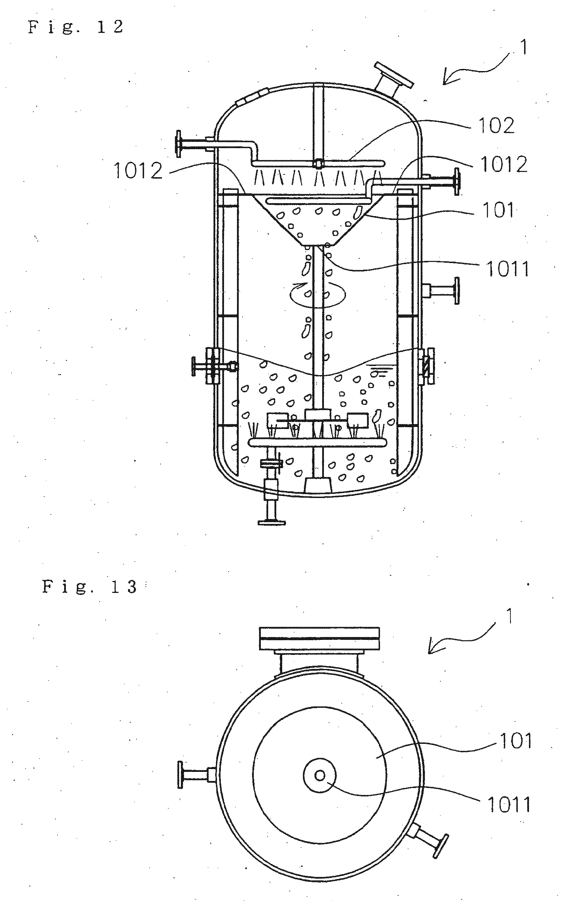

The sprinkler is arranged so as to protrude from the side of the warm water inlet into the tank, and has opened slits (continuous slits over the whole length of the sprinkler or plural slits of a specific length), holes (any shape of circle, oblong or polygon or the like, with no specific limitation to the shape) and the downwardly to the tank for removing solvent. The plane shape thereof is with no specific limitation. Preferably, the sprinkler is capable of uniformly sprinkling warm water over the whole periphery of the inner wall face of the tank. Figs. 8 and 9 show an example of ring sprinkler 102 protruding from the side of the warm water inlet in the tank equipped with a sprinkling port. Figs. 10 and 11, additionally, show an example of sprinkler 102 protruding in a semi-arc shape (both the ends are closed) from the side of the warm water inlet in the tank equipped with a sprinkling port. The sprinkler may be in a character C shape (both the ends are closed) protruding from the side of the warm water inlet in the tank, where the sprinkler partially wanes on the side opposite to the side of the warm water inlet. As described above, the structure of the sprinkling port is with no specific limitation. The port is preferably a slit arranged to sprinkle warm water beneath the sprinkler (just underneath or obliquely downwardly toward the inner wall face of the tank or toward the inner side of the tank). The sprinkling port 102 may be plural holes arranged at an appropriate interval along the peripheral direction. Further, the sprinkler 102 is particularly useful when arranged in combination with partition member 101 equipped with partition plate 1012 as shown in Figs. 12 and 13. As such arrangement in combination, crumb adhesion on the upper face of the partition member 101 can sufficiently be suppressed.

Additionally, the fall of crumb down to the liquid phase part can be promoted with a specific flush nozzle structure to reduce the flush speed of the polymer solution discharged from the flush nozzle arranged in communication with the tube for transferring polymer solution. Further, the flow of the solvent vapor down to the side of the liquid phase can be suppressed with the specific flush nozzle structure.

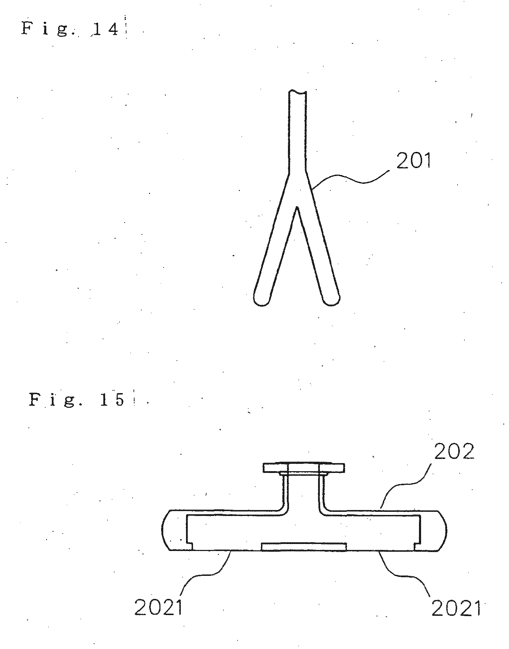

The flush nozzle structure includes for example a flush nozzle with a branch tube on the side of the tip end. The branch tube includes for example inverted Y character tube 201 on the tip end of a flush nozzle as shown in Fig.14, and inverted T character tube 202 on the tip end of a flush nozzle as shown in Fig.15. In case of the inverted T character tube, the tube has (1) a structure with slit 2021, holes or the like opened toward the downward portion of the tank for removing solvent on both the sides of a cross tube (the left and right are closed) or (2) a structure (tournament structure) with vertical tubes arranged downwardly in contiguous with the left and right ends of the cross tube. In these flush nozzle structures, polymer solution collides against the tube wall at the branch part or the diameter of the flush port is made larger than the diameter of the tube, so that the flush speed is suppressed and the dispersion of the polymer solution to be flushed can be suppressed.

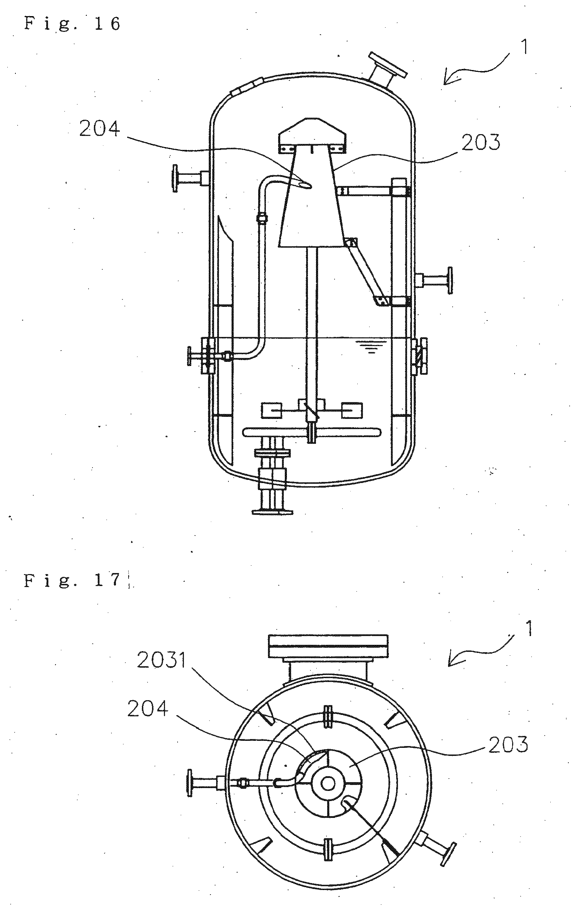

Still another example of the flush nozzle structure is a structure with at least cylinder 203 opened toward the downward portion of the tank for removing solvent, and flush nozzle 204 arranged in communication with the tube for transferring polymer solution and opened along the direction of the diameter of the cylinder in the vicinity 2031 of the innerwall face of the cylinder body, as shown in Figs. 16 and 17. In the flush nozzle structure of this cyclone type, flushed crumb descends on the inner wall face of the cylinder while the crumb draws a spiral curve, to suppress the flush speed and more securely make crumb fall down to the liquid phase part.

The flush nozzle may be arranged in contact with the inner wall face of the cylinder or the flush nozzle may be opened at a position apart from the inner wall face within a range such that crumb can descend on the inner wall face of the cylinder while the crumb draws a spiral curve.

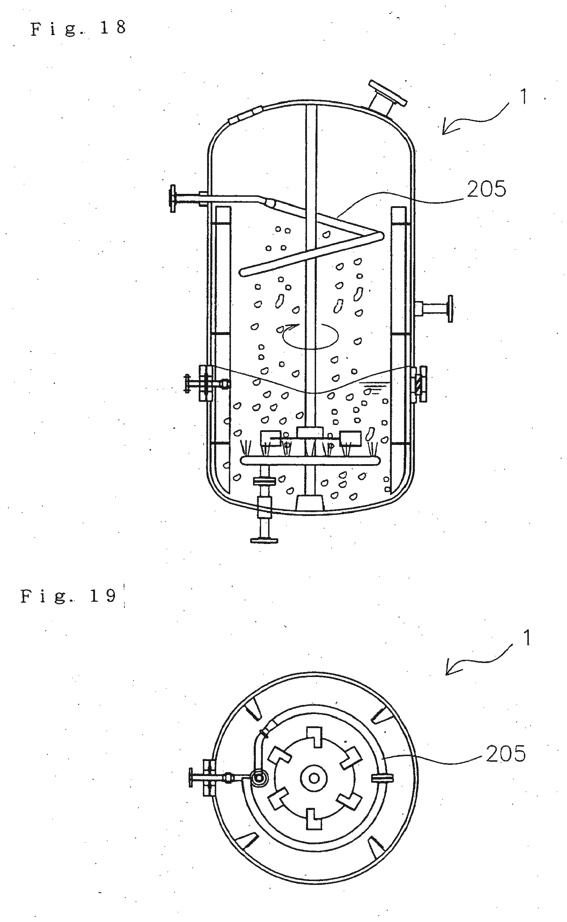

Another example of the flush nozzle structure is a structure such that an opening is arranged toward the downward portion of the tank for removing solvent on spiral tube 205 formed in a spiral shape along the vertical direction of the tank 1 for removing solvent, as shown in Figs. 18 and 19. In case of the flush nozzle of the spiral type, the opening may also be a slit or plural holes arranged at an appropriate interval along the peripheral direction.

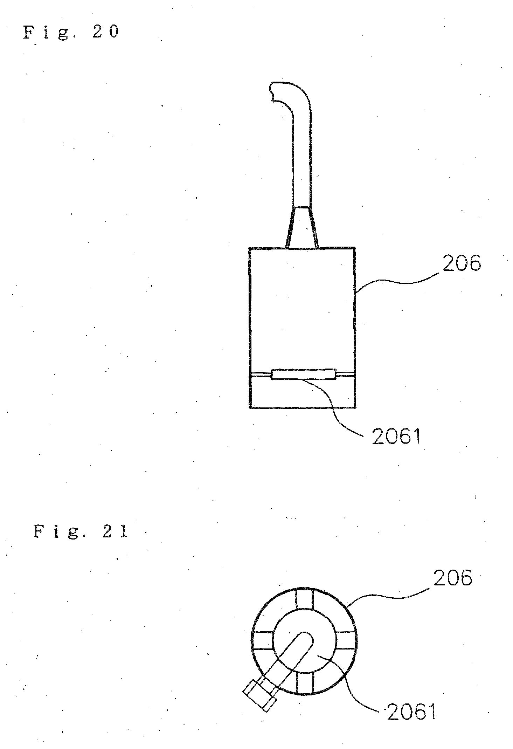

A still another example of the flush nozzle structure is baffle 2061 arranged in the inside of large-diameter tube 206 arranged on the tip end of the flush nozzle, as shown in Figs. 20 and 21. In the flush nozzle structure, the flush speed is suppressed and crumb dispersion is also suppressed owing to the collision of the polymer solution against the baffle and the tip end of the large-diameter tube. Because the baffle is arranged in the inside of the large-diameter tube, additionally, crumb dispersion is suppressed more effectively with the large-diameter tube. Further, by adjusting the length and opening diameter of the large-diameter tube and the position of the baffle along the vertical direction, dispersed crumb never deposits on the inner wall of the tank so that the whole amount can fall down toward the liquid phase part. The large-diameter tube may be of a constant diameter over the whole length or may be of an enlarging diameter toward the lower part thereof. In case of the enlarging diameter, crumb dispersion can be adjusted, depending on the angle of the enlargement.

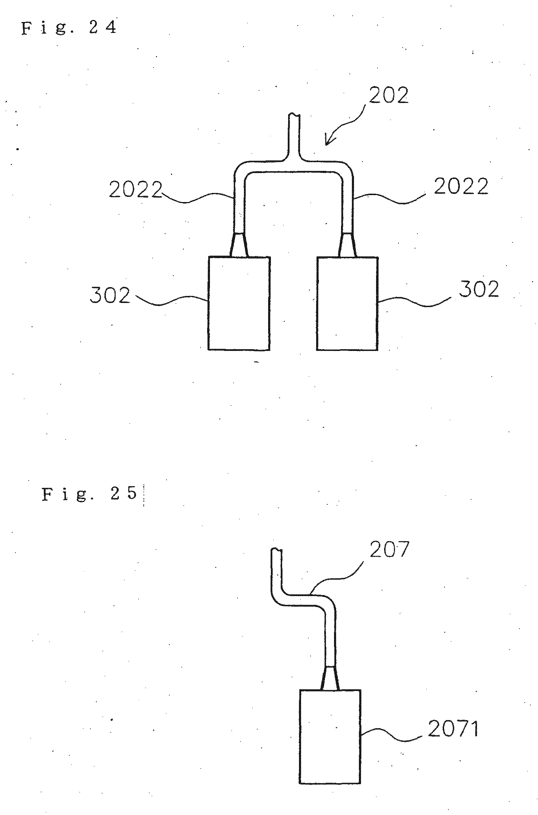

Further, another example of the flush nozzle structure is a curved tube with a curved tube part (see Fig. 25 below) which is arranged on the tip end of the flush nozzle. In the flush nozzle structure, the flush speed is suppressed by the collision of the polymer solution against the tube wall at the curved tube part and the tip end of such large diameter. The dispersion of the polymer solution flushed can be suppressed.

The various flush nozzle structure types described above may be of a structure arranged with a member for suppressing crumb dispersion. The member for suppressing crumb dispersion is arranged so as to sandwich or enclose the flush nozzle structure and is opened toward the downward portion of the tank for removing solvent. In such manner, crumb dispersion can be suppressed more, and crumb adhesion onto the inner wall face of the tank can sufficiently be suppressed.

In case that the flush nozzle structure is a branch tube, a skirt member arranged in a way to enclose the branch tube part and opened along the downward portion is listed as the member for suppressing crumb dispersion. The distance between the wall surfaces opposite to each other in the skirt member maybe constant. However, a skirt member enlarging at an appropriate angle toward the downward portion of the tank for removing solvent is more preferable. The angle of the enlargement is with no specific limitation. However, taking account of the distance from the flush nozzle to the liquid phase part, the diameter of the tank for removing solvent and the like, the angle may more preferably be an angle at which dispersed crumb can fall down to the liquid phase part with no adhesion of dispersed crumb on the inner wall face of the tank.

Still another example of the member for suppressing crumb dispersion is at least a pair of plates arranged in an opposite manner to each other to sandwich the branch part from both the sides thereof and opened downwardly. The interval of a pair of individual plates may be equal throughout. The interval may preferably be enlarged at an appropriate angle toward the downwardness of the tank for removing solvent. The angle of the enlargement is with no specific limitation. Taking account of the distance from the flush nozzle to the liquid phase part, the diameter of the tank for removing solvent and the like, the angle may more preferably be an angle at which dispersed crumb can fall down to the liquid phase part with no adhesion of dispersed crumb on the inner wall face of the tank.

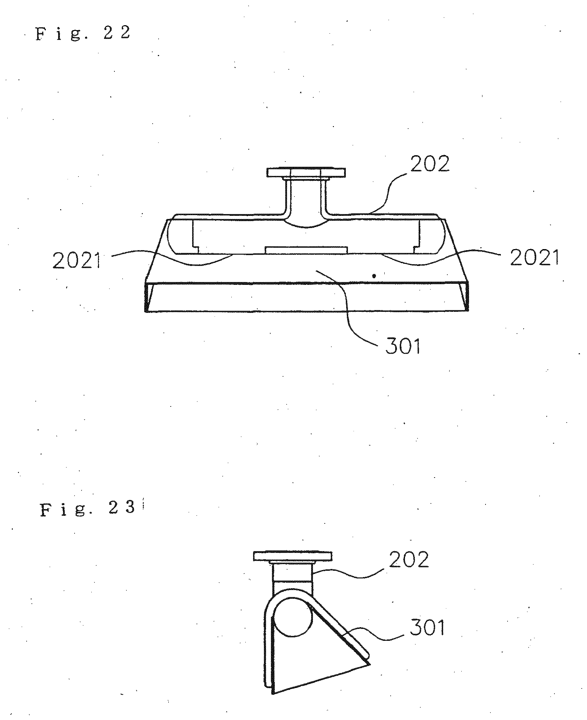

A specific example of such member for suppressing crumb dispersion as arranged on the flush nozzle structure in combination is inverted T character tube 202 arranged on the side of the tip end of the flush nozzle, on which skirt member 301 is arranged in a manner to be opened toward the downwardness of the tank for removing solvent, as shown in Figs.22 and 23. Owing to the skirt member to suppress crumb dispersion and the adjustment of the enlarging angle, almost the whole amount of dispersed crumb can fall down to the liquid phase part with no adhesion thereof on the inner wall face of the tank.

Another specific example of such member for suppressing crumb dispersion is large-diameter tube 302 of a larger diameter than those of individual branch tubes as arranged on the tip ends of the individual branch tubes 2022 of inverted T character tube 202 with branch tubes, as shown in Fig.24. Owing to the large-diameter tube to suppress crumb dispersion and the adjustment of the length and opening diameter of the large-diameter tube, almost the whole amount of dispersed crumb can fall down to the liquid phase part with no adhesion thereof on the inner wall face of the tank. The large-diameter tube may be of a constant diameter over the whole length or may have a diameter enlarging downwardly. In case of the enlarging diameter, crumb dispersion can be adjusted, depending on the enlarging angle.

Still another example of such member for suppressing crumb dispersion is large-diameter tube 2071 arranged on the tip end of the flush nozzle structure in case that the nozzle structure is curved tube 207, as shown in Fig.25. Owing to the large-diameter tube, the crumb dispersion is suppressed and by the adjustment of the length and opening diameter of the large-diameter tube, almost the whole amount of dispersed crumb can fall down to the liquid phase part with no adhesion thereof on the inner wall face of the tank for removing solvent. The large-diameter tube may be of a constant diameter over the whole length or may have a diameter enlarging downwardly. In case of the enlarging diameter, crumb dispersion can be adjusted, depending on the enlarging angle. In Fig.25, herein, a curved tube with two curved parts bent approximately at a right angle. However, the curve may not necessarily be a right angle. Depending on the suppression level of the flush speed, the curve may have an appropriate angle. Further, the angles of the two curved tube parts may be the same or different.

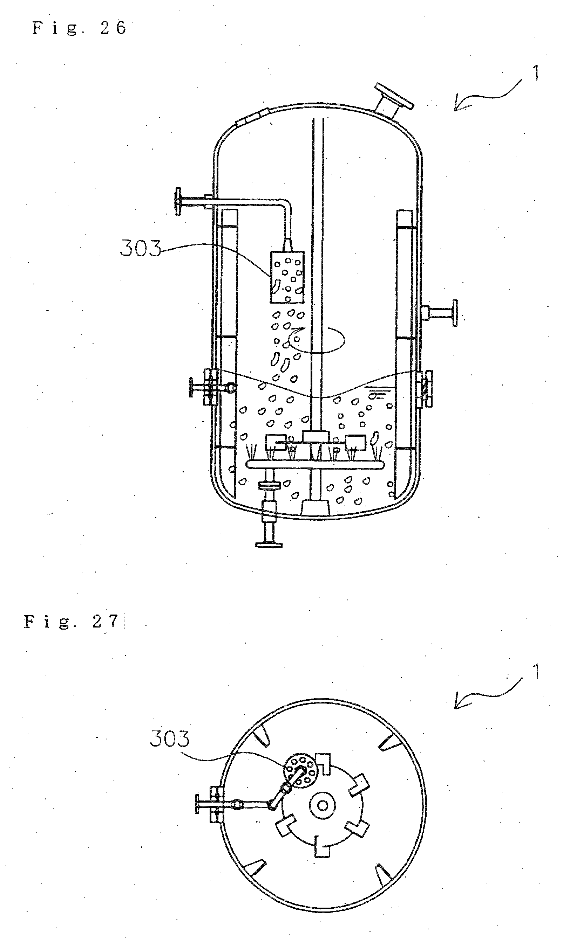

Still another example of such member for suppressing crumb dispersion is a flush nozzle formed of large-diameter flush tube 303 arranged on the tip end of the tube for transferring polymer solution, as shown in Figs. 26 and 27. In the flush nozzle, by the adjustment of the length and opening diameter of the large-diameter flush tube almost the whole amount of dispersed crumb can fall down to the liquid phase part with no adhesion thereof on the inner wall face of the tank. The flush tube may be of a constant diameter over the whole length or may have a diameter enlarging downwardly. In case of the enlarging diameter, crumb dispersion can be adjusted, depending on the enlarging angle.

For the apparatus for removing solvent in accordance with the invention, all combinations of the various constitutional members described above, namely [1] gas-liquid mixer, [2] partition member, [3] sprinkler and [4] flush nozzle structure (despite the presence or absence of the member for suppressing crumb dispersion) can be used, which fall within the definition of an apparatus according to clam 1. The apparatus of the invention includes, for example, (1) an apparatus for removing solvent with a gas-liquid mixer, as arranged with any combination of two of a partition member, a sprinkler and a flush nozzle structure as defined in claim 1; and (2) an apparatus for removing solvent for removing solvent with a gas-liquid mixer, as arranged with a partition member, a sprinkler and a flush nozzle structure as defined in claim 1. In individual cases of (1) and (2), the specific flush nozzle structure is as defined in claim 1. In case that such specific flush nozzle structure is arranged, further, a member for suppressing crumb dispersion may be arranged on the flush nozzle structure. The member for suppressing crumb dispersion may be any of the skirt member and the various large-diameter tubes described above. Depending on the constitution of the flush nozzle structure, an appropriate member for suppressing crumb dispersion can be arranged.

For the apparatus for removing solvent in accordance with the invention, a unit for feeding warm water with a warm water feed device (not shown in the figure) such as pump from a source for feeding warm water through a warm water feed tube to the tube for transferring polymer solution can be used. Further, the unit for feeding warm water can be used in combination with all combinations of the various constitutional members described above, namely [1] gas-liquid mixer, [2] partition member, [3] sprinkler and [4] flush nozzle structure (despite the presence or absence of the member for suppressing crumb dispersion), which fall within the definition of an apparatus according to claim 1. In this case, the unit for feeding warm water is preferably used in combination with the gas-liquid mixer. Additionally, the unit for feeding warm water may be used in combination with each of (1) and (2). To the position where warm water is fed, the amount of warm water to be fed, the mass ratio of warm water to polymer solution, and the temperature of warm water, the descriptions above can be applied as they are.

The apparatus for removing solvent in accordance with the invention and the method for removing solvent for use in removing solvent from polymer solution are now exemplified and described hereinbelow, using Fig. 1 depicting them as a series of systems.

Polymer tank 4 is a polymerization tank or an intermediate tank for storing polymer solution and is generally equipped with agitation wing 41 for polymer tank (motor is marked with 42). Polymer solution is supplied from polymer tank 4 with pump 5 and measured with flow meter 6, so that a given amount of polymer solution is transferred in tube 2 for transferring polymer solution. As the pump, quantitative pump is used. The quantitative pump includes for example gear pump, diaphragm pump and plunger pump.

Herein, warm water can be fed to the tube 2 for transferring polymer solution via warm water feed tube 221 so as to put steam and polymer solution efficiently in contact with each other to further improve the efficiency of solvent removal, as shown in Fig.28.

Subsequently, the polymer solution is fed to gas-liquid mixer 21 as shown in Fig.2; in the inside of the gas-liquid mixer 21, steam feed from steam source 211 for gas-liquid mixer via steam feed tube 212 for gas-liquid mixer is put sufficiently in contact with polymer solution, so that the solvent is vaporized, while the polymer is modified into crumb. When the solution is charged in the gas phase part of the tank 1 for removing solvent, the vaporized solvent is separated from the polymer. Subsequently, the crumb falls down to and is mixed in the liquid phase part of the tank 1 for removing solvent, while the liquid phase part is agitated with agitation wing 13 for the tank for removing solvent (motor is marked with 14). In the liquid phase part, additionally, solvent removal is done by steam stripping with steam feed from steam source 11 for the tank for removing solvent. The polymer after solvent removal is drawn from the tank 1 for removing solvent and is transferred in the tube 3 for transferring recovered polymer, for recovery. From the top of the tank 1 for removing solvent, the solvent removed from the polymer solution is recovered through tube 15 for recovering solvent, is cooled with cooler 7 for liquefaction, and is then transferred into decanter 8. In the decanter 8, the solvent is separated from solids, and is then purified and subsequently recovered.

The steam to the liquid phase part in the tank 1 for removing solvent may be fed from the bottom part of the tank 1 for removing solvent or may be fed from a side part thereof. In the tank 1 for removing solvent, the opening of the steam feed tube 12 for the tank for removing solvent may be of a simple form such that the tube itself is opened. Otherwise, the opening may be of a structure from which steam can be fed at a higher speed. The structure may be for example a structure composed of numerous holes of a smaller diameter than the diameter of the tube, as arranged and opened in a ring form in particular. The structure may be for example a structure composed of plural capillaries of a smaller diameter than the diameter of the tube, as opened in the same direction, particularly along the peripheral direction of the tank 1 for removing solvent.

### Brief Description of the Drawings

Fig.1 is a schematic view of an apparatus used for the assessment of solvent removal.
Fig.2 is a plane view depicting one example of the gas-liquid mixer.
Fig.3 is a perspective view of an agitation wing of corn cave type, as arranged in the tank for removing solvent.
Fig.4 is an explanatory view depicting the vertical sectional view of a tank for removing solvent, where a partition member is arranged so as to partition the gas phase part into upper and lower parts.
Fig.5 is an explanatory view of the cross sectional view of a tank for removing solvent, where a partition member is arranged so as to partition the gas phase part into upper and lower parts.
Fig.6 is an explanatory view depicting the vertical sectional view of a tank for removing solvent, where a partition plate is additionally arranged in the partition member in Figs. 4 and 5.
Fig. 7 is an explanatory view depicting the cross- sectional view of a tank for removing solvent, where a partition plate is additionally arranged in the partition member in Figs. 4 and 5.
Fig.8 is an explanatory view depicting the vertical sectional view of a sprinkler in a ring shape, which protrudes from the side of warm water feed inlet into the tank for removing solvent.
Fig. 9 is an explanatory view depicting the cross-sectional view of a sprinkler in a ring shape, which protrudes from the side of warm water feed inlet into the tank for removing solvent.
Fig.10 is an explanatory view depicting the vertical sectional view of a sprinkler in a semi-arc shape, which protrudes from the side of warm water feed inlet into the tank for removing solvent.
Fig.11 is an explanatory view depicting the cross-sectional view of a sprinkler of a semi-arc shape, which protrudes from the side of warm water feed inlet into the tank for removing solvent.
Fig.12 is an explanatory view depicting the vertical sectional view of the tank for removing solvent in Figs.6 and 7, which is additionally arranged with a sprinkler.
Fig.13 is an explanatory view depicting the cross-sectional view of the tank for removing solvent in Figs. 6 and 7, which is additionally arranged with a sprinkler.
Fig.14 is an explanatory view depicting inverted Y character tube as a specific flush nozzle structure.
Fig.15 is an explanatory view depicting inverted T character tube as a specific flush nozzle structure.
Fig.16 is an explanatory view depicting the vertical sectional view of a tank for removing solvent, which is arranged with a flush nozzle structure of cyclone type.
Fig.17 is an explanatory view depicting the cross-sectional view of a tank for removing solvent, which is arranged with a flush nozzle structure of cyclone type.
Fig.18 is an explanatory view depicting the vertical sectional view of a tank for removing solvent, which is arranged with a flush nozzle structure of spiral type.
Fig.19 is an explanatory view depicting the cross-sectional view of a tank for removing solvent, which is arranged with a flush nozzle structure of spiral type.
Fig.20 is an explanatory view depicting the vertical sectional view of a flush nozzle structure in which a baffle is arranged inside a large-diameter tube arranged on the tip end.
Fig.21 is an explanatory view depicting the cross-sectional view of a flush nozzle structure in which a baffle is arranged inside a large-diameter tube arranged on the tip end.
Fig.22 is an explanatory view of a structure viewed from the front face, such that a skirt member as a member for suppressing crumb dispersion is arranged on a T character tube as a specific nozzle structure to sandwich an opening arranged downwardly.
Fig. 23 is an explanatory view of a structure viewed along the cross direction, such that a skirt member as a member for suppressing crumb dispersion is arranged on a T character tube as a specific nozzle structure to sandwich an opening arranged downwardly.
Fig.24 is an explanatory view depicting a structure in which a large-diameter tube as a member for suppressing crumb dispersion is arranged on the individual branch tubes of an inverted T character tube as a specific flush nozzle structure.
Fig. 25 is a perspective view depicting a structure in which a large-diameter tube as a member for suppressing crumb dispersion is arranged on the tip end of a curved tube as a specific nozzle structure.
Fig.26 is an explanatory view depicting the vertical sectional view of a tank for removing solvent having a flush nozzle equipped with a large-diameter flush tube on the tip end thereof.
Fig.27 is an explanatory view depicting the cross-sectional view of a tank for removing solvent having a flush nozzle equipped with a large-diameter flush tube on the tip end thereof.
Fig.28 is an explanatory view of an enlarged view of a warm water feed source and a warm water feed tube.
Fig. 29 shows graphs depicting the correlation between the amount of steam feed into the gas-liquid mixer and the concentration of residual solvent.

### Best Mode for Carrying out the Invention

### [1] Examination of residual solvent concentration in case of changing the whole steam amount to solvent and changing the ratio of individual amounts of steam feed to gas-liquid mixer and to tank for removing solvent

### * Experimental Example 1 (Examples 1 through 4 and Comparative Examples 1 and 2)

### *reference example

Using a mixture solvent of 90 % by mass of cyclohexane and 10 % by mass of n-heptane as a reaction solvent, a polymer solution (at temperature of 60°C) containing styrene • butadiene copolymer (styrene content; 10 % by mass) at 20 % by mass, as obtained by copolymerizing styrene and butadiene together using n-butyl lithium as a polymerization initiator was treated for solvent removal with the apparatus shown in Fig.1. Specifically, transferring the styrene • butadiene copolymer solution in polymer tank 4 (made of stainless steel; inner volume of 3 m³) under agitation with pump 5 (plunger pump) through tube 2 for transferring polymer solution, the copolymer solution was fed at a speed of 130 liters/hour to line mixer 21 as a gas-liquid mixer arranged inside the tube 2 for transferring polymer solution. Simultaneously feeding steam [pressure (gauge pressure) of 1.2MPa and temperature of 220 °C (the same pressure and temperature were used hereinbelow)] from steam source 211 to the gas-liquid mixer 21, the solvent was vaporized. Subsequently, the polymer solution was charged through the tube 2 for transferring polymer solution into the gas phase part of the tank 1 for removing solvent (made of stainless steel; inner volume of 2 m³) to remove the solvent. Simultaneously feeding steam from steam source 11 for tank for removing solvent from the bottom of the tank 1 for removing solvent with steam feed tube 12 for tank for removing solvent, the polymer solution was further treated by steam stripping for removing solvent. Herein, the flush nozzle on the side of the tip end of the tube 2 for transferring polymer solution is of the straight tube form of the tube 2 for transferring polymer solution as it is.

Steam was fed as follows. When the solvent contained in polymer solution is defined as 100 parts by mass, the total of the amount of steam to be fed to the gas-liquid mixer and the amount of steam to be fed to the tank for removing solvent should be 100 parts by mass. The individual amounts to be fed were changed as shown in Table 1. In this Experimental Example, the theoretical amount of the steam in total to the amount of solvent is 0.27.

The pressure inside the tank for removing tank was 0.04 MPa on a gauge pressure basis.

### *Experimental Example 2 (Examples 5 and 6 and Comparative Examples 3 and 4)

### *reference example

Solvent was removed in the same manner as in the Experimental Example 1, except that the total of the amount of steam to be fed to the gas-liquid mixer and the amount of stem to be fed to the tank for removing solvent was 150 parts by mass when the solvent contained in polymer solution was defined as 100 parts by mass and the individual amounts to be fed were changed as shown in Table 1.

### *Experimental Example 3 (Examples 7 through 9 and Comparative Examples 5 and 6)

### *reference example

Solvent removal was done in the same manner as in Experimental Example 1, except for the use of a mixture solvent of 90 % by mass of cyclohexane and 10 % by mass of n-heptane as a reaction solvent and a polymer solution (at temperature of 60 °C) containing styrene • butadiene rubber (styrene content; 35 % by mass) at 15 % by mass, as obtained by copolymerizing styrene and butadiene together using n-butyl lithium as a polymerization initiator and except that the total of the amounts of steam feed to the gas-liquid mixer and to the tank for removing solvent was 70 parts by mass when the solvent contained in the polymer solution was defined as 100 parts by mass and the amounts thereof individually fed thereto were changed as shown in Table 1.

In these Experimental Examples 1 through 3, the term concentration of the residual solvent in the polymer after solvent removal means the concentration of the solvent in the dried polymer and was determined by gas chromatography (apparatus with FID).

The results of Experimental Examples 1 through 3 are also shown in Table 1.

The numerical figures in parenthesis in the columns of the amount of steam feed show the ratios (unit; % by mass) of individual amounts of steam feed to the gas-liquid mixer and to the tank for removing solvent in case that the total amount of steam is defined as 100 % by mass.

**Table 1**

| | | | Total steam amount (parts by mass) | Amount of steam feed (% by mass) | | Concentration of residual solvent (% by mass) |
|---|---|---|---|---|---|---|
| | | | | Gas-liquid mixer | Tank for removing solvent | |
| Experimental Example 1 | Comparative Example 1 | | 100 | 0 (0) | 100 (100) | 2.9 |
| | Example | 1 | 100 | 20 (20) | 80 (80) | 2.2 |
| | | 2 | | 30 (30) | 70 (70) | 1.7 |
| | | 3 | | 40 (40) | 60 (60) | 2.4 |
| | | 4 | | 50 (50) | 50 (50) | 2.4 |
| | Comparative Example 2 | | 100 | 100 (100) | 0 (0) | 3.7 |
| Experimental Example 2 | Comparative Example 3 | | 150 | 0 (0) | 150 (100) | 1.6 |
| | Example | 5 | 150 | 20 (13.3) | 130 (86.7) | 1.4 |
| | | 6 | | 30 (20) | 120 (80) | 1.2 |
| | Comparative Example 4 | | 150 | 150 (100) | 0 (0) | 1.5 |
| Experimental Example 3 | Comparative Example 5 | | 70 | 0 (0) | 70 (100) | 3.2 |
| | | 7 | 70 | 30 (42.9) | 40 (57.1) | 1.7 |
| | | 8 | | 40 (57.1) | 30 (42.9) | 1.9 |
| | | 9 | | 50 (71. 4) | 20 (28. 6) | 3.0 |
| | Comparative Example 6 | | 70 | 70 (100) | 0 (0) | 3.9 |

According to the results in Table 1, the concentrations of the residual solvent in Examples 1 through 4 in Experimental Example 1 were 1.7 to 2.4 % by mass and were superior to Comparative Example 1 at 2.9 % by mass and Comparative Example 2 at 3.7 % by mass. The concentrations of the residual solvent in Examples 5 and 6 in Experimental Example 2 were 1.2 to 1.4 % by mass and were superior to Comparative Example 3 at 1.6 % by mass and Comparative Example 4 at 1.5 % by mass. Further, the concentrations of the residual solvent in Examples 7 through 9 in Experimental Example 3 were 1.7 to 3.0 % by mass and were superior to Comparative Example 5 at 3.2 % by mass and Comparative Example 6 at 3.9 % by mass. It is shown that in case that steam was fed at an amount as large as 150 parts by weight as the whole amount of steam to solvent as in Experimental Example 2, in particular, the concentrations of the residual solvent were lower.

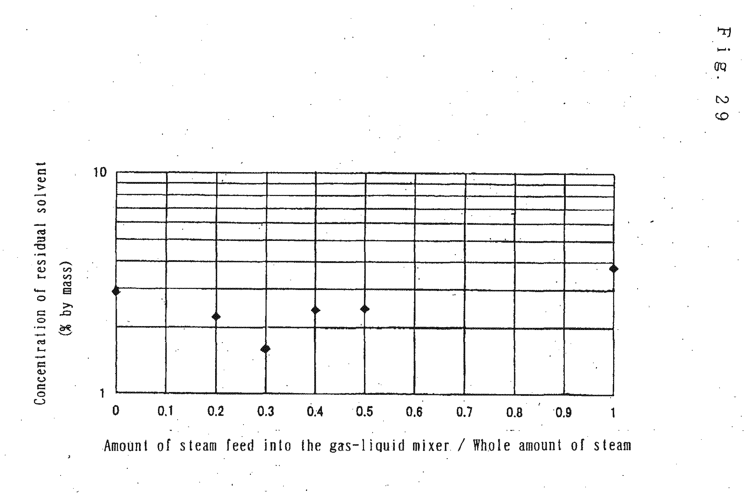

According to Fig.29 representing the concentration of residual solvent in case of changing the steam amount to the gas-liquid mixer /whole amount of steam (Sf/St) in Experimental Example 2, the concentration of residual solvent is the lowest when Sf/St is 0.3. The steam at 0.3, namely of 30 parts by mass is a feed amount approximate to the calculated amount required for solvent evaporation. It is shown that the concentration of residual solvent is larger when Sf/St is a value smaller or larger than the value.

### [2] Examination of concentration of residual solvent due to difference in the inner structure of tank for removing solvent

In the same manner as in Experimental Example 3 except for that the whole amount of steam to solvent was defined as 100 parts by mass; and that the amount of steam feed to the gas-liquid mixer was defined as 30 % by mass and the amount of steam feed to the tank for removing solvent was defined as 70 % by mass, solvent was removed while the inner structure of the tank for removing solvent was modified as follows.

### *Example 10

### *reference example

Using a flush nozzle of a straight tube type where the end of a tube for transferring polymer solution was used as nozzle as it was, a polymer solution was flushed for solvent removal.

### Example 11

Using a flush nozzle structure of a spiral type where slits were arranged on a spiral tube formed in a spiral shape along the vertical direction of a tank for removing solvent obliquely and downwardly, toward the center part thereof over almost the whole length (see Figs. 18 and 19) thereof, a polymer solution was flushed for solvent removal.

### Example 12

Using a flush nozzle where a large-diameter flush tube was arranged on the tip end of a tube for transferring polymer solution (see Figs. 26 and 27), a polymer solution was flushed for solvent removal.

### * Example 13

### *reference example

Using an apparatus equipped with a corn-type partition member (see Figs. 4 and 5) slanting downward (slanting angle; 45 °) from the side of the inner wall of a tank for removing solvent toward the side of the center thereof, as arranged so that the gas phase part of the tank for removing solvent might be partitioned into upper and lower parts, where a flush nozzle was mounted on the upper part of the partition member, a polymer solution was flushed for solvent removal.

### * Example 14

### *reference example

Using an apparatus where a diskpartition plate was arranged between the periphery of a corn-type partition member used in Example 13 and the inner wall of the tank, to open only the center of the partition member and where a flush nozzle was mounted on the upper part of the partition member (see Figs.6 and 7), a polymer solution was flushed for solvent removal.

### * Example 15

### *reference example

Using an apparatus equipped with a partition member arranged with a disk partition plate as used in Example 14 and a flush nozzle mounted on the upper part of the partition member, where a sprinkler was arranged on the upper part of the flush nozzle (see Figs. 12 and 13), warm water at the same temperature as that of the tank for removing solvent was sprinkled at a flow of 400 liters/hour for solvent removal.

### * Example 16

### *reference example

Using an apparatus equipped with a cylinder opened toward the downwardness of a tank for removing solvent and a cyclone-type flush nozzle structure arranged in communication with a tube for transferring polymer solution and opened on the inner wall face of the cylinder along the diameter direction of the cylinder (see Figs. 16 and 17), a polymer solution was flushed for solvent removal.

The results of Examples 10 through 16 are shown in Table 2. Additionally, the status of polymer adhesion on the upper face of the partition member was observed visually. The results are also shown in Table 2. The status of polymer adhesion was assessed on the basis of the following two grades.
○: polymer adhesion in a thin layer on the upper face of partition member.
Δ: thick polymer layer formed on the upper face of partition member.

**Table 2**

| | | Partition member or flush nozzle structure | Flush nozzle or flush nozzle structure | sprinkler | Concentration of residual solvent (% by mass) | Status of polymer adhesion on partition member |
|---|---|---|---|---|---|---|
| Example | 10 | - | Straight tube type | - | 1.7 | - |
| | 11 | - | Spiral type | - | 1.3 | - |
| | 12 | - | Cylinder type | - | 1.5 | - |
| | 13 | Corn type | Straight tube type | - | 1.1 | Δ |
| | 14 | Corn type, partition plate arranged in combination | Straight tube type | - | 0.4 | Δ |
| | 15 | Corn type, partition plate arranged in combination | Straight tube type | Yes | 0.4 | ○ |
| | 16 | Cyclone type | Straight tube type | - | 0.7 | - |

The whole amount of steam to solvent was defined as 100 parts by mass; and 30 % by mass thereof was then fed to the gas-liquid mixer while 70 % by mass thereof was then fed to the tank for removing solvent.

According to the results in Table 2, the concentrations of residual solvent were as low as 1. 3 to 1. 5 % by mass in Examples 11 and 12 where the shape of flush nozzle was modified, indicating that Examples 11 and 12 were superior to Example 10 with no change of the flush nozzle shape. In Example 13 where the corn-type partition member was arranged, the more excellent result that the concentration of residual solvent was as low as 1.1 % by mass was obtained. In Examples 14 and 15 where the partition member was arranged and the partition plate was also arranged in combination, further, the especially excellent result that the concentrations of residual solvent were or extremely low, as 0.4 % by mass was obtained. In Example 16 using an apparatus equipped with a cyclone type flush nozzle structure, the excellent result that the concentration of residual solvent was extremely reduced to 0.7 % by mass was obtained. As to the status of polymer adhesion, alternatively, polymer adhesion was reduced in Example 15 where a partition member and a sprinkler were arranged in combination, which was excellent. In Examples 14 and 15, the concentrations of residual solvent were equal. As to the status of polymer adhesion, however, Example 15 is superior in which the corn-type partition member arranged with a partition plate is additionally equipped with a sprinkler, demonstrating and supporting the effect of such sprinkler.

## Claims

1. An apparatus for removing solvent from polymer solution, wherein the solvent has a boiling point of 25 to 180°C at a pressure of 0.1 MPa, the temperature of the polymer solution is 0 to 150°C and the number average molecular weight (Mn) of the polymer is 5,000 to 5,000,000, including a tank for removing solvent, comprising:
a tube for transferring polymer solution to transfer polymer solution to the tank for removing solvent, one end of which is opened in the tank for removing solvent,
a steam feed tube for piping which is in communication with said tube for transferring polymer solution to feed steam to the said tube, and a steam feed tube for tank, one end of which is opened in said tank for removing solvent,
wherein said apparatus is equipped with a gas-liquid mixer arranged in said tube for transferring polymer solution and a steam feed tube for the gas-liquid mixer which is in communication with said tube for transferring polymer solution or said gas-liquid mixer to feed steam into said gas-liquid mixer;
said tank for removing solvent is equipped with the following member (3):
(3) a flush nozzle structure selected from the following members (a), (c), or (d) to reduce the flush speed of the polymer solution discharged from a flush nozzle arranged in communication with said tube for transferring polymer solution and to suppress the flow of the solvent vapor down to the side of the liquid phase;
(a) a flush nozzle structure is a flush nozzle with a branch tube arranged on the side of the tip end thereof;
(c) a flush nozzle structure is a spiral tube arranged in communication with said tube for transferring polymer solution and formed in a spiral shape along the vertical direction of said tank for removing solvent, where an opening is arranged toward the downwardness of said tank for removing solvent;
(d) a flush nozzle structure is equipped a flush nozzle arranged large-diameter tube on the tip end of said flush nozzle and baffle arranged in the inside of said large-diameter tube.

2. The apparatus for removing solvent according to claim 1, wherein said tank for removing solvent is equipped with the following members (1) and (2):
(1) a partition member arranged beneath the position where a flush nozzle arranged in communication with said tube for transferring polymer solution is opened, so that the gas phase part of said tank for removing solvent may be partitioned into an upper part and a lower part, to suppress the flow of the solvent vapor discharged from said flush nozzle down to the side of the liquid phase;
(2) a sprinkler arranged inside said tank for removing solvent to sprinkle warm water so as to suppress crumb adhesion or make deposited crumb flow down to the liquid phase part.

3. The apparatus for removing solvent according to claim 1, wherein said tank for removing solvent is equipped with the following member (2) and member (3):
(2) a sprinkler arranged inside said tank for removing solvent to sprinkle warm water so as to suppress crumb adhesion or make deposited crumb flow down to the liquid phase part.

4. The apparatus for removing solvent according to claim 2, wherein said partition member has a corn-type shape slanting downward from the side of the inner wall of said tank for removing solvent toward the side of the center thereof and has an opening only on the center part thereof.

5. The apparatus for removing solvent according to any one of claims 1 to 4, wherein said apparatus being equipped with a member for suppressing crumb dispersion, and the member is arranged on the tip end of the flush nozzle with a branch tube arranged on the side of the tip end thereof and is opened toward the downwardness of said tank for removing solvent.

## Patentansprüche

1. Vorrichtung zum Entfernen von Lösungsmittel aus einer Polymerlösung, wobei das Lösungsmittel einen Siedepunkt von 25 bis 180°C bei einem Druck von 0,1 MPa aufweist, die Temperatur der Polymerlösung 0 bis 150°C ist und das zahlengemittelte Molekulargewicht (Mn) des Polymers 5000 bis 5000000 ist, die einen Tank zum Entfernen von Lösungsmittel beinhaltet, umfassend:
ein Rohr zum Transferieren von Polymerlösung, um Polymerlösung zu dem Tank zum Entfernen von Lösungsmittel zu transferieren, von welchem ein Ende in den Tank zum Entfernen von Lösungsmittel geöffnet ist,
ein Dampfzuführrohr zum Leiten, welches in Verbindung mit dem Rohr zum Transferieren von Polymerlösung ist, um Dampf zu dem Rohr zu führen, und ein Dampfzuführrohr für den Tank, von welchem ein Ende in dem Tank zum Entfernen von Lösungsmittel geöffnet ist,
wobei die Vorrichtung mit einem Gasflüssigmixer, der in dem Rohr zum Transferieren von Polymerlösung angeordnet ist, und einem Dampfzuführrohr für den Gasflüssigmixer ausgestattet ist, welches in Verbindung mit dem Rohr zum Transferieren von Polymerlösung oder dem Gasflüssigmixer ist, um Dampf in den Gasflüssigmixer zu führen;
der Tank zum Entfernen von Lösungsmittel ist mit dem folgenden Element (3) ausgestattet:
(3) eine Sprühstutzenstruktur, die aus den folgenden Elementen (a), (c) oder (d) ausgewählt ist, um die Sprühgeschwindigkeit der Polymerlösung, die aus einem Sprühstutzen ausgestoßen wird, der in Verbindung mit dem Rohr zum Transferieren von Polymerlösung angeordnet ist, zu reduzieren und um den Strom des Lösungsmitteldampfs abwärts zu der Seite der flüssigen Phase zu unterdrücken;
(a) eine Sprühstutzenstruktur ist ein Sprühstutzen mit einem verzweigten Rohr, das auf der Seite des Düsenendes davon angeordnet ist;
(c) eine Sprühstutzenstruktur ist ein Spiralrohr, das in Verbindung mit dem Rohr zum Transferieren von Polymerlösung angeordnet ist und in einer Spiralform entlang der vertikalen Richtung des Tanks zum Entfernen von Lösungsmittel gebildet ist, wo eine Öffnung in Richtung des Abwärtigen des Tanks zum Entfernen von Lösungsmittel angeordnet ist;
(d) eine Sprühstutzenstruktur ist ausgestattet mit einem Sprühstutzen, der ein Großdurchmesserrohr auf dem Düsenende des Sprühstutzens angeordnet hat und ein Leitblech, das im Inneren des Großdruchmesserohrs angeordnet ist.

2. Vorrichtung zum Entfernen von Lösungsmittel nach Anspruch 1, wobei der Tank zum Entfernen von Lösungsmittel mit den folgenden Elementen (1) und (2) ausgestattet ist:
(1) ein Partitionselement, das unterhalb der Position angeordnet ist, wo ein Sprühstutzen, der in Verbindung mit dem Rohr zum Transferieren von Polymerlösung angeordnet ist, geöffnet ist, sodass der Gasphasenteil des Tanks zum Entfernen von Lösungsmittel in einen oberen Teil und einen unteren Teil aufgeteilt werden kann, um den Strom des Lösungsmitteldampfs, der aus besagtem Sprühstutzen ausgestoßen wird, abwärts zu der Seite der flüssigen Phase zu unterdrücken;
(2) ein Sprinkler, der innerhalb des Tanks zum Entfernen von Lösungsmittel angeordnet ist, um Warmwasser zu versprühen, um Klumpenadhäsion zu verhindern oder abgeschiedene Klumpen dazu zu bringen zu dem flüssigen Phasenteil herunterzufließen.

3. Vorrichtung zum Entfernen von Lösungsmittel nach Anspruch 1, wobei der Tank zum Entfernen von Lösungsmittel mit dem folgenden Element (2) und Element (3) ausgestattet ist:
(2) ein Sprinkler, der innerhalb des Tanks zum Entfernen von Lösungsmittel angeordnet ist, um Warmwasser zu versprühen, um Klumpenadhäsion zu verhindern oder abgeschiedene Klumpen dazu zu bringen zu dem flüssigen Phasenteil herunterzufließen.

4. Vorrichtung zum Entfernen von Lösungsmittel nach Anspruch 2, wobei das Partitionselement eine maisartige Form aufweist, die abwärts zu der Seite der inneren Wand des Tanks zum Entfernen von Lösungsmittel in Richtung der Seite des Zentrums davon schräg abfällt und eine Öffnung nur auf dem Zentrumsteil davon aufweist.

5. Vorrichtung zum Entfernen von Lösungsmittel nach einem der Ansprüche 1 bis 4, wobei die Vorrichtung mit einem Element zum Unterdrücken von Klumpendispersion ausgestattet ist, und das Element auf dem Düsenende des Sprühstutzens mit einem verzweigten Rohr angeordnet ist, das auf der Seite des Düsenendes davon angeordnet ist und in Richtung des Abwärtigen des Tanks zum Entfernen von Lösungsmittel geöffnet ist.

## Revendications

1. Appareil destiné à éliminer un solvant d'une solution de polymère, dans lequel le solvant a un point d'ébullition de 25 à 180 °C sous une pression de 0,1 MPa , la température de la solution de polymère est de 0 à 150 °C et la masse moléculaire moyenne en nombre (Mn) du polymère est de 5 000 à 5 000 000, comportant un réservoir destiné à éliminer un solvant, comprenant :
un tube destiné à transférer une solution de polymère pour transférer une solution de polymère au réservoir destiné à éliminer un solvant, dont une extrémité est ouverte dans le réservoir destiné à éliminer un solvant,
un tube d'alimentation en vapeur d'eau destiné à la tuyauterie qui est en communication avec ledit tube destiné à transférer la solution de polymère pour alimenter ledit tube en vapeur d'eau, et un tube d'alimentation en vapeur d'eau pour le réservoir, dont une extrémité est ouverte dans ledit réservoir destiné à éliminer le solvant,
dans lequel ledit appareil est équipé d'un mélangeur gaz-liquide agencé dans ledit tube destiné à transférer la solution de polymère et d'un tube d'alimentation en vapeur d'eau pour le mélangeur gaz-liquide qui est en communication avec ledit tube destiné à transférer la solution de polymère ou ledit mélangeur gaz-liquide pour alimenter de la vapeur d'eau dans ledit mélangeur gaz-liquide ;
ledit réservoir destiné à éliminer le solvant est équipé de l'élément (3) suivant :
(3) une structure de buse de rinçage choisie parmi les éléments de (a), (c) ou (d) suivants pour réduire la vitesse de rinçage de la solution de polymère déchargée d'une buse de rinçage agencée en communication avec ledit tube destiné à transférer la solution de polymère et pour supprimer le flux de la vapeur de solvant vers le bas vers le côté de la phase liquide ;
(a) une structure de buse de rinçage est une buse de rinçage ayant un tube de ramification agencé sur le côté de son extrémité de pointe ;
(c) une structure de buse de rinçage est un tube en spirale agencé en communication avec ledit tube destiné à transférer la solution de polymère et présente une forme de spirale le long de la direction verticale dudit réservoir destiné à éliminer le solvant, où une ouverture est agencée vers la partie inférieure dudit réservoir destiné à éliminer le solvant ;
(d) une structure de buse de rinçage est équipée d'un tube de grand diamètre agencé sur la buse de rinçage sur l'extrémité de pointe de ladite buse de rinçage et d'une chicane agencée à l'intérieur dudit tube de grand diamètre.

2. Appareil destiné à éliminer un solvant selon la revendication 1, dans lequel ledit réservoir destiné à éliminer le solvant est équipé des éléments (1) et (2) suivants :
(1) un élément de séparation agencé au-dessous de la position où une buse de rinçage, agencée en communication avec ledit tube destiné à transférer la solution de polymère, est ouverte, de sorte que la partie de phase gazeuse dudit réservoir destiné à éliminer le solvant puisse être séparée en une partie supérieure et une partie inférieure, pour supprimer le flux de la vapeur de solvant déchargée de ladite buse de rinçage vers le bas vers le côté de la phase liquide ;
(2) un asperseur agencé à l'intérieur dudit réservoir destiné à éliminer le solvant pour asperger de l'eau tempérée de manière à supprimer l'adhérence de granules ou à amener des granules déposés à s'écouler vers le bas vers la partie de phase liquide.

3. Appareil destiné à éliminer un solvant selon la revendication 1, dans lequel ledit réservoir destiné à éliminer le solvant est équipé de l'élément (2) suivant et de l'élément (3) :
(2) un asperseur agencé à l'intérieur dudit réservoir destiné à éliminer le solvant pour asperger de l'eau tempérée de manière à supprimer l'adhérence de granules ou à amener des granules déposés à s'écouler vers le bas vers la partie de phase liquide.

4. Appareil destiné à éliminer un solvant selon la revendication 2, dans lequel ledit élément de séparation présente une forme de type cône inclinée vers le bas depuis le côté de la paroi intérieure dudit réservoir destiné à éliminer le solvant vers le côté de son centre et présente une seule ouverture sur sa partie centrale.

5. Appareil destiné à éliminer un solvant selon l'une quelconque des revendications 1 à 4, dans lequel ledit appareil étant équipé d'un élément pour supprimer la dispersion de granules, et l'élément est agencé sur l'extrémité de pointe de la buse de rinçage avec un tube de ramification agencé sur le côté de son extrémité de pointe et est ouvert vers la partie inférieure dudit réservoir destiné à éliminer le solvant.
